# EUROPÄISCHE PATENTSCHRIFT

(11) **EP 0 943 630 B1**
(45) Veröffentlichungstag und Bekanntmachung des Hinweises auf die Patenterteilung: **05.06.2002**
(21) Anmeldenummer: 99103881.1
(22) Anmeldetag: 01.03.1999
(51) Int. Cl.: C08F 8/32, C09B 69/10, G02F 1/361

(54) **Nichtlinear-optisch aktive Copolymere, daraus hergestellte Polymermaterialien und daraus aufgebaute elektrooptische und photonische Bauelemente**
Nonlinear optically active copolymers, polymers materials prepared therefrom and electro-optical and photonic devices using the same
Polyméres non linéaires optiquement actifs, matériaux polymériques préparés à partir de ceux-ci et dispositifs électro-optiques et photoniques les utilisant

(30) Priorität: 09.03.1998 DE 19810064
(43) Veröffentlichungstag der Anmeldung: 22.09.1999
(73) Patentinhaber: SIEMENS AKTIENGESELLSCHAFT, 80333 München (DE)
(72) Erfinder: Kanitz, Andreas, Dr., 91333 Höchstadt (DE); Fricke, Christian, Dr., 14050 Berlin (DE)

(56) Entgegenhaltungen:
- DE-A- 4 312 243
- US-A- 4 796 976

## Beschreibung

Polymere mit nichtlinear-optischen Eigenschaften sind aus dem Stand der Technik bekannt. Solche Materialien werden beispielsweise als elektrooptische Schalter eingesetzt und finden Anwendung in Bereichen der Informationsverarbeitung und der integrierten Optik, wie optische chip-to-chip Verbindungen, waveguiding in elektrooptischen Schichten, Mach-Zehnder-Interferometer und die optische Signalverarbeitung in der Sensorik.

Ein Überblick über die aktuellen Probleme bei der Entwicklung von Materialien mit ausgeprägten nichtlinear-optischen Eigenschaften findet sich in "Angewandte Chemie", Bd. 107 (1995), Seiten 167 bis 187. Neben den Erfordernissen, die an die nichtlinear-optischen Chromophore gestellt werden müssen, wird dabei auch auf die Probleme bei der Entwicklung polymerer Matrizen für die Einbettung der Chromophore und ihre orientierungsstabile Ausrichtung hingewiesen.

Damit Polymere, die mit kovalent gebundenen oder gelösten nichtlinear-optischen Chromophoren versehen sind, nichtlinear-optisch aktiv werden und eine hohe Suszeptibilität 2. Ordnung aufweisen, müssen die Chromophore im elektrischen Feld orientiert werden. Hierzu wird auf J.D. Swalen et al. in J. Messier, F. Kajzar, P. Prasad "Organic Molecules for Nonlinear Optics and Photonics", Kluwer Academic Publishers 1991, Seiten 433 bis 445, verwiesen. Diese Orientierung erfolgt üblicherweise im Bereich der Glasübergangstemperatur, wo die Beweglichkeit der Kettensegmente der Polymeren eine Orientierung der nichtlinear-optischen Chromophore ermöglicht. Die im Feld erzielte Orientierung wird dann durch Abkühlen oder besser durch Vernetzen des Polymers eingefroren.

Die dabei erreichbare Suszeptibilität 2. Ordnung χ⁽²⁾ ist proportional zur räumlichen Dichte der Hyperpolarisierbarkeit β, zum Grundzustandsdipolmoment µ₀ der Chromophore, zum elektrischen Polungsfeld und zu Parametern, welche die Orientierungsverteilung nach dem Polungsprozeß beschreiben. Hierzu wird auf K.D. Singer et al. in P.N. Prasad, D.R. Ulrich "Nonlinear Optical and Electroactive Polymers", Plenum Press, New York 1988, Seiten 189 bis 204, verwiesen.

Von großem Interesse sind Verbindungen mit einem hohen Dipolmoment und gleichzeitig hohen β-Werten. Deshalb sind insbesondere Chromophore untersucht worden, die aus konjugierten π-Elektronensystemen bestehen, welche an einem Ende des Moleküls einen Elektronendonor und am anderen Ende einen Elektronenakzeptor tragen und kovalent an ein Polymer, beispielsweise an Polymethylmethacrylat (US-PS 4 915 491), Polyurethan (EP-OS 0 350 112) oder Polysiloxan (US-PS 4 796 976), gebunden sind.

Die genannten und im Stand der Technik bekannten Polymermaterialien mit nichtlinear-optischen Eigenschaften weisen den Nachteil auf, daß eine Relaxation der orientierten Chromophorbausteine eintritt und somit ein Verlust der nichtlinear-optischen Aktivität erfolgt. Diese Relaxation verhindert derzeit noch die Herstellung technisch verwertbarer, langzeitstabiler elektrooprischer Bauelemente.

Ein weiterer Nachteil der bekannten Polymermaterialien mit nichtlinear-optischen Eigenschaften ist, daß keine Modifizierung hinsichtlich der Größe des NLO-Koeffizienten und anderer wichtiger Parameter, wie Brechungsindex und Glastemperatur, möglich ist. Auch sind die bisher beschriebenen chromophoren Systeme, bedingt durch ihre chemische Struktur, nicht ausreichend thermisch stabil, um die während der Herstellung und/oder Nutzung der elektrooptischen und photonischen Bauelemente auftretenden thermischen Belastungen ohne Schäden zu überstehen. So tritt bereits bei 85°C ein merklicher Abfall der gemessenen elektrooptischen Koeffizienten durch die Relaxationsprozesse der Chromophore in der Polymermatrix auf.

Wünschenswert wäre eine Stabilität dieser optischen Koeffizienten bei Temperaturen von oberhalb 100°C, und aus diesem Grund wird gleichzeitig eine wesentlich höhere Glastemperatur des polymeren Materials gefordert.

Aufgabe der vorliegenden Erfindung war es demnach, polymere Materialien mit stabiler nichtlinear-optischer Aktivität zu entwickeln. Insbesondere sollten Materialien zur Verfügung gestellt werden, bei denen eine Relaxation der Chromophore bis zu Temperaturen von oberhalb 100°C verhindert wird und deren chromophore Bestandteile bei Temperaturen von größer als 200°C über einen langen Zeitraum thermisch-oxidativ stabil sind.

Diese Aufgaben konnten mit der vorliegenden Erfindung gelöst werden.

Gegenstand der vorliegenden Erfindung sind demnach nichtlinear-optisch aktive Copolymere der allgemeinen Formel 1 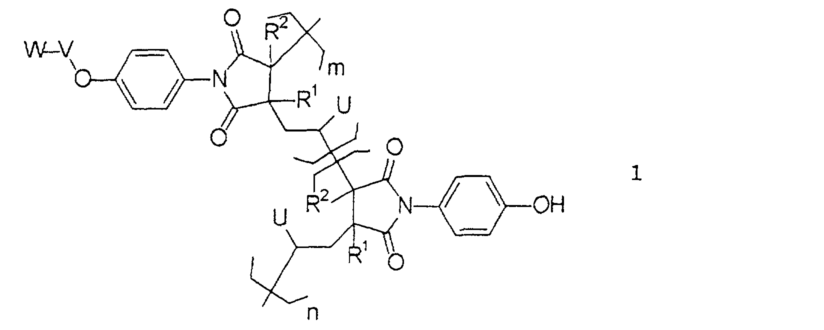 wobei folgendes gilt:
- R¹, R²: sind - unabhängig voneinander - H, CH₃ oder Halogen;
- U: ist ein linearer oder verzweigter C₁- bis C₂₀-Alkylrest, ein C₅- bis C₇-Cycloalkylrest, ein bi- oder tri-cyclischer Alkylrest mit bis zu 18 C-Atomen, ein Aryl - oder Heteroarylrest oder ein alkylsubstituierter Silanrest der Struktur - (CH₂)ₙ-Si(R',R'',R''') mit n = 1 bis 5 und R', R'', R''' = C₁- bis C₆-Alkyl;
- V: ist eine lineare oder verzweigte Kohlenwasserstoffkette mit 2 bis 20 C-Atomen, wobei eine oder mehrere nicht-benachbarte CH₂-Gruppen, mit Ausnahme der bindenden CH₂-Gruppe zum Rest W, durch O, S oder NR³ ersetzt sein können, wobei R³ für H oder einen linearen oder verzweigten C₁- bis C₆-Alkylrest steht;
- W: ist eine nichtlinear-optisch aktive Gruppe;
m : n = 5 : 95 bis 95 : 5.

Die nichtlinear-optisch aktive Gruppe W kann beispielsweise ein Chromophor vom Typ der Azofarbstoffe, Stilbenfarbstoffe oder Polymethinfarbstoffe sein. Vorzugsweise hat die Gruppe W eine Struktur der allgemeinen Formel 2 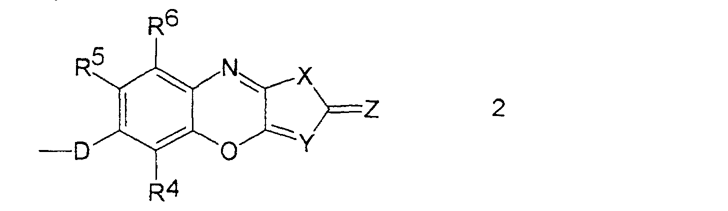 die mit D an V gebunden ist, und wobei
- D: für O, S oder NR⁷ steht, wobei R⁷ ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, ein Benzylrest oder ein Phenyl- oder Naphthylrest ist oder R⁷ und V zusammen mit den sie verbindenden N-Atom einen Pyrrolidinyl-, Piperidinyl-, Morpholinyl- oder Piperazinylrest bilden,
- R⁴, R⁵, R⁶: jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, oder ein Phenyl-, Naphthyl-, Thienyl-, Thiazolyl- oder Pyridylrest sind,
- Z: eine Elektronenakzeptor-substituierte Methylen- oder Iminogruppe ist,
- X: für S, O, NR⁸ oder eine Ringdoppelbindung oder für 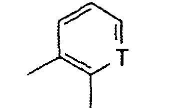 steht, wobei R⁸ ein Wasserstoffatom, ein linearer oder verzweigter C₁- bis C₂₀-Alkylrest oder ein Phenyl- oder Naphthylrest ist und T für CH oder N steht oder gegebenenfalls Z und T zusammen eine Struktur vom Typ =N-SO₂-C≡, =N-CS-C≡ oder =N-CO-C≡ bilden, und
- Y: eine CH- oder CR⁹-Gruppe oder N ist, wobei R⁹ ein linearer oder verzweigter C₁- bis C₁₀-Alkyltest, ein Phenyl- oder ein Naphthylrest ist.

Die chromophore Gruppe W in diesen Copolymeren zeigt eine thermisch-oxidative Stabilität bis über 200°C und die Einbettung dieser chromophoren Gruppe in das erfindungsgemäße polymere Matrixsystem läßt überraschenderweise eine breite Variation der optischen Eigenschaften zu.

Bei einer bevorzugten Ausführungsform der vorliegenden Erfindung bedeuten die Substituenten R¹ und R² ein Wasserstoffatom. Der Rest V ist vorzugsweise ein C₂- bis C₆-Kohlenwasserstoffrest. Der Rest U leitet sich allgemein von einer U-substituierten Vinylverbindung ab, wobei als Rest U im Prinzip alle Reste in Frage kommen, welche eine hohe Glasübergangstemperatur bewirken. Geeignete Arylreste für U sind Phenyl- und Naphthylreste, geeignete Heteroarylreste Thienyl-, Thiazolyl- und Pyridylreste; bi- bzw. tricyclische Alkylreste sind insbesondere Norbornyl- und Adamantylreste. Besonders geeignete Copolymere für die erfindungsgemäßen Zwecke ergeben sich, wenn U für eine C₆- bis C₁₀-Alkylgruppe, eine C₆-Cycloalkylgruppe, einen Phenylrest oder eine Silylgruppe der allgemeinen Formel -(CH₂)ₙ-Si(R',R'',R''') steht, wobei n = 1 ist und R', R'' und R''' - unabhängig voneinander - C₁- bis C₅-Alkylgruppen sind.

Im chromophoren Bestandteil W ist der Rest Z vorzugsweise eine Dicyanomethylen-, Alkoxycarbonyl-cyanomethylen-, Cyanimino- oder Alkoxycarbonyliminogruppe. Die Gruppe Y bedeutet vorzugsweise CH und die Gruppe X vorzugsweise einen 1,2-anellierten Benzolring.

Hinsichtlich der gemäß der vorliegenden Erfindung verwendeten chromophoren Verbindungen wird auch auf die gleichzeitig eingereichte europäische Patentanmeldung EP 943 661 A ("Chromophore Verbindungen und Verfahren zu ihrer Herstellung") verwiesen. Die chromophoren Verbindungen machen in den Copolymeren einen Anteil von 5 bis 95 Mol-%, vorzugsweise 20 bis 50 Mol-%, aus.

Die nichtlinear-optisch aktiven Copolymeren nach der vorliegenden Erfindung sind amorphe Copolymere, die aus streng alternierend angeordneten Comonomeren aufgebaut sind, welche kovalent gebundene nichtlinear-optische Moleküleinheiten und vernetzungswirksame funktionelle Gruppen aufweisen.

Die Herstellung der Copolymeren (durch radikalische Polymerisation bzw. imidisierende Kondensation) sowie die Synthese der Chromophore und ihrer Vorstufen und die chemische Anbindung der Chromophore an die Basispolymermatrix erfolgt entweder nach an sich bekannten Verfahren und/oder ist in den Ausführungsbeispielen beschrieben.

Die radikalische Polymerisation kann durch thermisch zerfallende radikalische Initiatoren erfolgen. Als derartige Initiatoren dienen vorzugsweise Azoisobuttersäurenitril und Perverbindungen, wie Dibenzoylperoxid.

Aus den erfindungsgemäßen nichtlinear-optischen Copolymeren lassen sich Polymermaterialien bzw. elektrooptische und photonische Bauelemente mit stabilen nichtlinear-optischen Eigenschaften erzeugen.

Dementsprechend sind ein weiterer Gegenstand der vorliegenden Erfindung NLO-Polymermaterialien mit stabilen nichtlinear-optischen Eigenschaften, welche aus einem nichtlinear-optisch aktiven Copolymer der vorstehend angegebenen Art (mit vernetzbaren freien phenolischen Hydroxylgruppen) und einem Vernetzer aufgebaut sind, wobei auf 1 Grammäquivalent vernetzbare freie Hydroxylgruppen des nichtlinear-optischen Copolymers 1/n Grammäquivalent eines n-funktionalisierten Vernetzers entfallen.

Als vernetzungswirksame Komponenten können folgende Verbindungsklassen wahlweise fungieren:
a) bi- oder oligo-funktionalisierte Glycidether, die durch Ringöffnung und Etherbildung die freien phenolischen Hydroxylgruppen addieren;
b) bi- oder oligo-funktionalisierte Isocyanate bzw. Isothiocyanate, die durch Urethanbildung die freien phenolischen Hydroxylgruppen addieren;
c) bifunktionelle Anhydride zusammen mit einem beliebigen nicht-flüchtigen Oxiranderivat, wobei durch Esterbildung - infolge der Addition des Anhydrids an die freien phenolischen Hydroxylgruppen - die Vernetzung stattfindet und dann die bei dieser Reaktion gebildeten Carboxylgruppen an das Oxiranderivat addiert werden.

Zur Verbesserung der Oberflächenbeschaffenheit, der Verarbeitbarkeit und/oder der Verträglichkeit mit Polymeren können den erfindungsgemäßen polymeren Materialien, je nach Einsatzzweck, Verarbeitungshilfsmittel zugesetzt werden. Das sind beispielsweise Thixotropiermittel, Verlaufmittel, Weichmacher, Netzmittel, Gleitmittel und Bindemittel.

Die NLO-Polymermaterialien nach der Erfindung werden in gelöster Form und zusammen mit den vernetzungswirksamen Verbindungen durch Aufschleudern, Tauchen, Bedrucken oder Bestreichen auf ein Substrat aufgebracht. Auf diese Weise erhält man eine nichtlinear-optische Anordnung, wobei die polymeren Materialien in elektrischen Feldern, während des langsamen Aufheizens bis zur Glastemperatur, dipolar ausgerichtet werden und unmittelbar anschließend die Vernetzung kinetisch kontrolliert stattfindet. Nach dem Abkühlen werden Polymermaterialien mit ausgezeichneten nichtlinear-optischen Eigenschaften und, bedingt durch die Vernetzung, erhöhter Orientierungsstabilität und somit erhöhter Langzeitstabilität auch bei erhöhten Gebrauchstemperaturen erhalten. Die Polymermaterialien mit nichtlinear-optischen Eigenschaften nach der vorliegenden Erfindung sind aufgrund ihrer Stabilität und Modifizierbarkeit zur Erzeugung elektrooptischer und photonischer Bauelemente geeignet, die in der nichtlinearen Optik Verwendung finden.

Gegenstand der vorliegenden Erfindung sind deshalb ferner elektrooptische und photonische Bauelemente, welche wenigstens eine Funktionsschicht aus dem erfindungsgemäßen vernetzten, nichtlinear-optischen Polymermaterial umfassen.

Zur Erzeugung der Funktionsschicht wird vorzugsweise ein nichtlinear-optisches Copolymer gemäß der Erfindung gemeinsam mit einem geeigneten Vernetzer auf ein geeignetes Trägermaterial, wie Glas, ITO-beschichtetes Glas (ITO = Indium-Zinn-Oxid) oder Siliziumwafer, beispielsweise durch sogenanntes Spin-coating oder jedes andere zur Erzeugung dünner Schichten geeignete Verfahren, aufgetragen. Die Vernetzung wird dann in geeigneter Weise bei erhöhter Temperatur, gegebenenfalls unter gleichzeitiger polarer Ausrichtung, durchgeführt. Zur genauen Vorgehensweise wird auf die nachfolgenden Beispiele verwiesen.

Bei einer bevorzugten Ausführungsform der vorliegenden Erfindung ist die aus NLO-Material erzeugte Funktionsschicht nicht unmittelbar auf das Trägermaterial aufgebracht, sondern zwischen zwei Pufferschichten angeordnet. Die Pufferschichten dienen dabei zur Abkopplung des optischen Signals von den Elektroden, um die Dämpfung so gering wie möglich zu halten. Vorzugsweise werden die Pufferschichten aus einem entsprechenden vernetzten NLO-Polymermaterial gebildet, aber mit geringerem Chromophorgehalt.

Die Erfindung wird im folgenden anhand von Ausführungsbeispielen näher erläutert, wobei zunächst die Synthese der nichtlinear-optisch aktiven Verbindungen dargestellt ist, sodann die im Rahmen der Erfindung verwendete Synthese der Copolymeren und die Einbringung der nichtlinear-optisch aktiven Chromophore in die Copolymeren beschrieben ist und schließlich die Synthese der nichtlinear-optisch aktiven Polymermaterialien angegeben ist.

In den Beispielen werden folgende Abkürzungen verwendet:
- Fp. = Fusionspunkt (Schmelzpunkt);
- Kp. = Kochpunkt (Siedepunkt);
- Zers. = Zersetzung.

### Beispiel 1

a) 0,1 mol m-Aminophenol werden in 150 ml Methanol mit 0,11 mol n-Butylbromid und 0,1 mol NaHCO₃ versetzt und 5 h unter Rückfluß erhitzt. Nach dem Abkühlen wird filtriert und das Lösungsmittel im Vakuum entfernt. Das zurückbleibende Öl wird im Vakuum fraktioniert. Es entsteht 3-(n-Butyl-amino)-phenol.
   Ausbeute 57 %; Kp. 110°C (6·10⁻⁵ Torr); Fp. 35°C.
b) 0,1 mol 3-(n-Butyl-amino)-phenol werden in 100 ml Methanol mit 0,11 mol 2-Bromethanol und 0,1 mol NaHCO₃ 10 h unter Rückfluß erhitzt. Nach dem Abkühlen wird filtriert, das Lösungsmittel im Vakuum entfernt und der Rückstand fraktioniert. Es entsteht 3-[N-(n-Butyl)-N-(2-hydroxyethyl)-amino]-phenol.
   Ausbeute 54 %; Kp. 130-140°C (5·10⁻⁵ Torr); Fp. 45-47°C.
c) 0,05 mol der Verbindung nach b) werden in 50 ml HCl-gesättigtem Propanol gelöst und mit 0,1 mol Isoamylnitrit versetzt. Nach 20 min wird mit 150 ml Diethylether versetzt und das gebildete Produkt abgesaugt. Es entsteht 2-Nitroso-5-[N-(n-butyl)-N-(2-hydroxyethyl)-amino]-phenolhydrochlorid.
   Ausbeute 76 %; Fp. 127°C (Zers.).
d) 0,01 mol der Verbindung nach c) werden mit 0,011 mol 1-Naphthyl-malonitril und 0,02 mol Triethylamin in 15 ml Dimethylformamid kurzzeitig zum Sieden erhitzt. Nach dem Abkühlen wird mit Wasser versetzt und das ausfallende Produkt mit Dichlorethan extrahiert. Nach dem Abdestillieren des Lösungsmittels wird der Rückstand mehrmals durch Chromatographie an Kieselgel unter Verwendung von Essigester als Laufmittel gereinigt. Es entsteht Benzo[a]-5-dicyanomethylen-9-[N-(n-butyl)-N-(2-hydroxyethyl)-amino]-7,12-phenoxazin, eine Verbindung folgender Struktur: 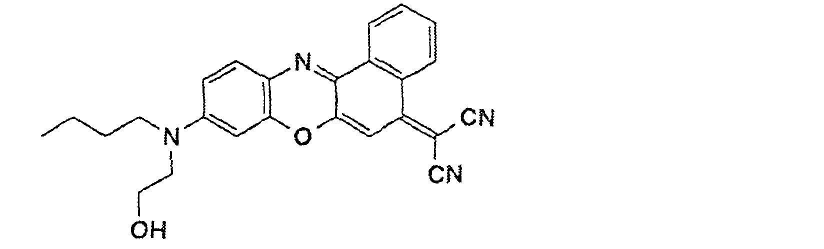 Ausbeute 30 %; Fp. 190°C; λₘₐₓ 618 nm (in Toluol).

### Beispiel 2

a) 0,1 mol m-Aminophenol werden in 150 ml Methanol mit 0,11 mol n-Heptyl-bromid und 0,1 mol NaHCO₃ versetzt und 5 h unter Rückfluß erhitzt. Nach dem Abkühlen wird filtriert und das Lösungsmittel im Vakuum entfernt. Das zurückbleibende Öl wird im Vakuum fraktioniert. Es entsteht 3-(n-Heptyl-amino)-phenol.
   Ausbeute 62 %; Kp. 130-140°C (8·10⁻⁵ Torr); Fp. 27-30°C.
b) 0,1 mol 3-(n-Heptyl-amino)-phenol werden in 100 ml Methanol mit 0,11 mol 2-Bromethanol und 0,1 mol NaHCO₃ 10 h unter Rückfluß erhitzt. Nach dem Abkühlen wird filtriert, das Lösungsmittel im Vakuum entfernt und der Rückstand fraktioniert. Es entsteht 3-[N-(n-Heptyl)-N-(2-hydroxyethyl)-amino]-phenol.
   Ausbeute 54 %; Kp. 160-170°C (1·10⁻⁵ Torr), Fp. 45-47°C.
c) 0,05 mol der Verbindung nach b) werden in 50 ml HCl-gesättigtem Propanol gelöst und mit 0,1 mol Isoamylnitrit versetzt. Nach 20 min wird mit 150 ml Diethylether versetzt und das gebildete Produkt abgesaugt. Es entsteht 2-Nitroso-5-[N-(n-heptyl)-N-(2-hydroxyethyl)-amino]-phenol-hydrochlorid.
   Ausbeute 62 %; Fp. 129°C (Zers.).
d) 0,01 mol der Verbindung nach c) werden mit 0,011 mol 1-Naphthyl-malonitril und 0,02 mol Triethylamin in 15 ml Dimethylformamid kurzzeitig zum Sieden erhitzt. Nach dem Abkühlen wird mit Wasser versetzt und das ausfallende Produkt mit Dichlorethan extrahiert. Nach dem Abdestillieren des Lösungsmittels wird der Rückstand mehrmals durch Chromatographie an Kieselgel unter Verwendung von Essigester als Laufmittel gereinigt. Es entsteht Benzo[a]-5-dicyanomethylen-9-[N-(n-heptyl)-N-(2-hydroxyethyl)-amino]-7,12-phenoxazin, eine Verbindung folgender Struktur: 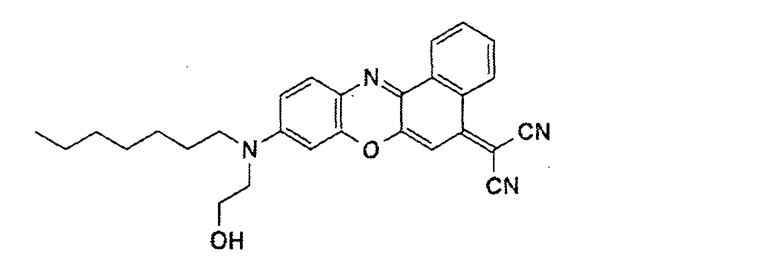 Ausbeute 28 %; Fp. 155-157°C; λₘₐₓ 622 nm (in Toluol).

### Beispiel 3

Analog Beispiel 1 erfolgt die Herstellung von 2-Dicyanomethylen-6-[N-(n-butyl)-N-(2-hydroxyethyl)-amino]-thieno-[3,2-b]benzo[e]-oxazin der Formel 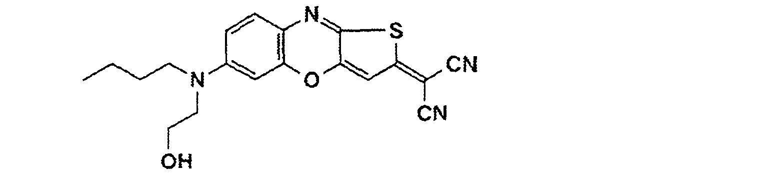 indem 0,01 mol 2-Nitroso-5-[N-(n-butyl)-N-(2-hydroxyethyl)-amino]-phenol-hydrochlorid (siehe Beispiel 1c) mit 0,01 mol 2-Thienylmalonitril, das durch Reaktion von 0,13 mol Malonitril in 100 ml absolutem Tetrahydrofuran mit 0,15 mol Natriumhydrid, 0,0015 mol [(C₆H₅)₃P]₂PdCl₂ und 25 g 2-Iodthiophen durch 3-stündiges Kochen unter Rückfluß und anschließende Neutralisation mit Salzsäure in einer Ausbeute von 45 % hergestellt wurde, in 15 ml Dimethylformamid, welchem 0,02 mol Triethylamin zugesetzt wurden, einige Minuten unter Rückfluß erhitzt werden. Die erhaltene Lösung wird - nach dem Abkühlen - mit Wasser verdünnt und der dabei ausgefällte Farbstoff durch Absaugen isoliert. Die Reinigung erfolgt durch mehrmalige Säulenchromatographie an Kieselgel mit Essigester als Laufmittel.
Ausbeute 23 %; Fp. 260°C.

### Beispiel 4

Entsprechend Beispiel 2 wird aus 2-Nitroso-5-[N-(n-heptyl)-N-(2-hydroxyethyl)-amino]-phenol-hydrochlorid (siehe Beispiel 2c) und 1,8-Naphthosultam 9-[N-(n-Heptyl)-N-(2-hydroxyethyl)-amino]-benzo[d]isothiazolo-[3,3a,4-ab]-phen-7,12-oxazin-4-dioxid, ein Phenoxazinfarbstoff folgender Struktur, hergestellt (Ausbeute 35 %; Fp. 178-180°C):

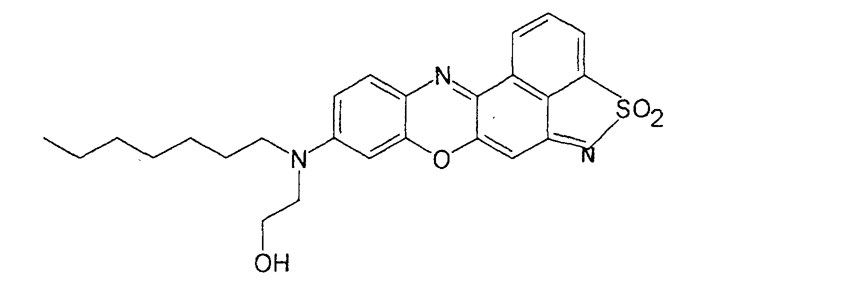

### Beispiel 5

Entsprechend Beispiel 3 wird aus 2-Nitroso-5-[N-(n-butyl)-N-(2-hydroxyethyl)-amino]-phenol-hydrochlorid (siehe Beispiel 1c) und N-Cyano-1-naphthylamin Benzo [a]-5-cyanimino-9-[N-(n-butyl)-N-(2-hydroxyethyl)-amino]-7,12-phenoxazin, ein Phenoxazinfarbstoff folgender Struktur, hergestellt (Ausbeute 25 %; Fp. 173-175°C):

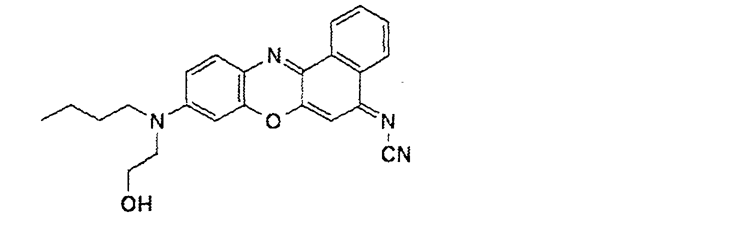

### Beispiel 6

Entsprechend Beispiel 3 wird aus 2-Nitroso-5-[N-(n-butyl)-N-(2-hydroxyethyl)-amino]-phenol-hydrochlorid (siehe Beispiel 1c) und 8-Cyanamino-chinolin Pyridino[2,3-a]-5-cyanimino-9-[N-(n-butyl)-N-(2-hydroxyethyl)-amino]-7,12-phenoxazin, ein Phenoxazinfarbstoff folgender Struktur, hergestellt (Ausbeute 32 %; Fp. 185-187°C):

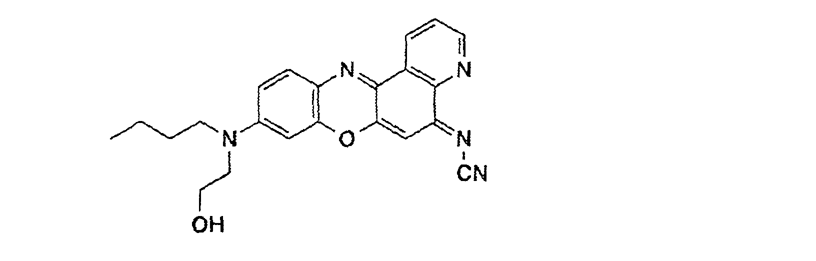

### Synthese von Copolymeren

### a) Radikalische Polymerisation

### Beispiel 7

Unter absolut wasserfreien Bedingungen und sauerstofffreier Inertgasspülung werden 0,5 mol Maleinsäureanhydrid und 0,5 mol Trimethylallylsilan in 500 ml Dioxan gelöst und unter Zusatz von 2 Mol-% Azoisobuttersäurenitril (als Radikalstarter) unter Rühren und Thermostatisieren auf 50°C für 10 h zur Reaktion gebracht. Im Anschluß daran wird das Lösungsmittel am Rotationsverdampfer im Vakuum vollständig entfernt, wobei ein Copolymer folgender Struktur in quantitativer Ausbeute erhalten wird (T_{g}: 200°C):

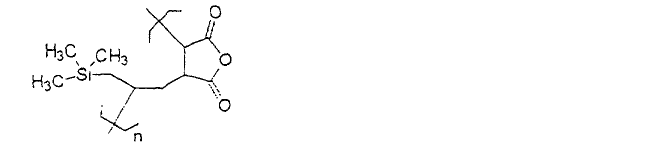

### Beispiel 8

Entsprechend Beispiel 7 wird aus Maleinsäureanhydrid und Styrol ein Copolymer folgender Struktur in quantitativer Ausbeute erhalten (T_{g}: 185°C):

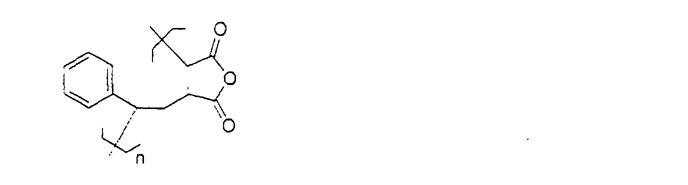

### b) Imidisierende Kondensation

### Beispiel 9

21,4 g des nach Beispiel 7 hergestellten Copolymers werden unter Rühren in 40 ml Dimethylformamid gelöst, dann werden 10,9 g p-Aminophenol, gelöst in 20 ml Dimethylformamid, zugegeben. Nach einer Reaktionszeit von 30 min wird ein Gemisch aus 40 ml Acetanhydrid und 20 ml Pyridin zugegeben, und anschließend wird 4 h bei 90°C gerührt. Nach dem Abkühlen wird aus der Copolymerlösung durch Eintropfen in 1,5 l Methanol unter kräftigem Rühren das Reaktionsprodukt der nachfolgenden Struktur ausgefällt, dann wird abgesaugt und getrocknet (T_{g}: 180°C, Ausbeute 85 %) :

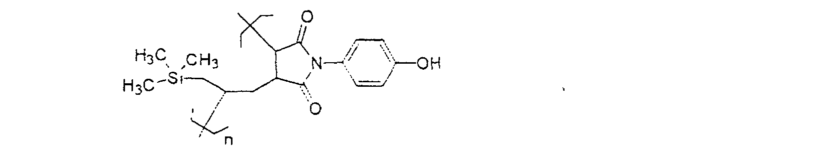

### Beispiel 10

Entsprechend Beispiel 9 wird aus 20,2 g des nach Beispiel 8 hergestellten Copolymers ein Copolymer folgender Struktur hergestellt (T_{g}: 150°C, Ausbeute: 80 %):

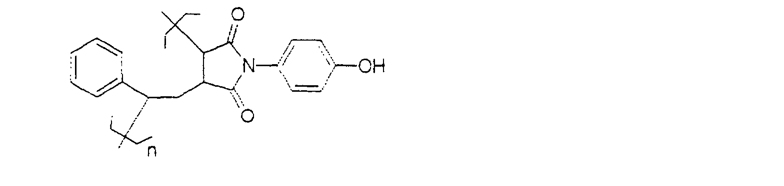

### Synthese von nichtlinear-optisch aktive Chromophore enthaltenden Copolymeren

### Beispiel 11

8,8 g des Copolymers nach Beispiel 10 (30 mmol) werden unter Rühren, Feuchtigkeitsausschluß und Inertgasspülung mit 6 g des Chromophors nach Beispiel 1 (15 mmol = 50 Mol-%) und 8 g Triphenylphosphin (30 mmol) in 150 ml N-Methyl-pyrrolidon (NMP) gelöst. Danach werden 5 ml Azodicarbonsäurediethylester (30 mmol), gelöst in 25 ml NMP, langsam zugetropft; zur Vervollständigung der Umsetzung wird weitere 8 h gerührt. Nachfolgend wird durch Eintropfen der Polymerlösung in Methanol unter starkem Rühren das Reaktionsprodukt ausgefällt und dann abgesaugt und getrocknet. Das Rohprodukt wird durch Zusatz von Tetrahydrofuran vollständig gelöst und zur Reinigung wiederholt aus Methanol umgefällt, wobei ein chromophorhaltiges Copolymer folgender Struktur erhalten wird:

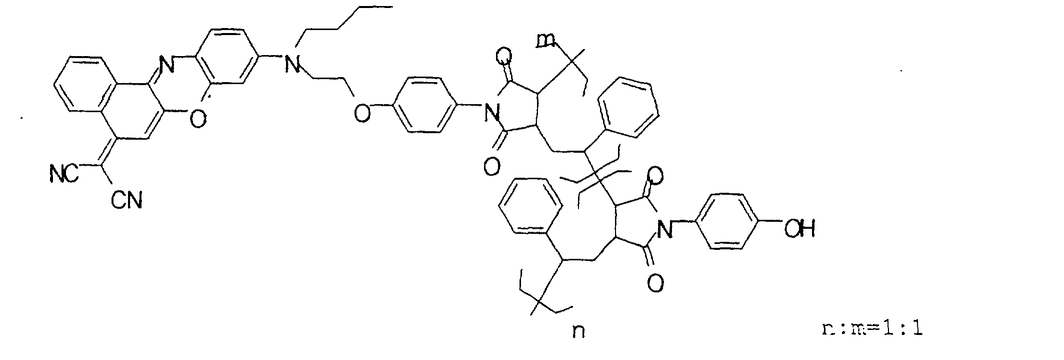

Die Ergebnisse sind in Tabelle 1 zusammengefaßt.

### Beispiel 12

Entsprechend Beispiel 11 wird aus 9,1 g des Copolymers nach Beispiel 9 (30 mmol) und 6,8 g des Chromophors nach Beispiel 2 (15 mmol = 50 Mol-%) ein chromophorhaltiges Copolymer folgender Struktur erhalten:

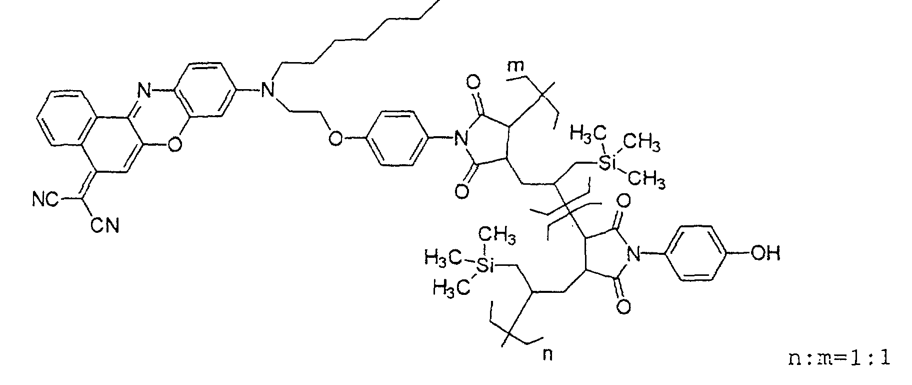

Die Ergebnisse sind in Tabelle 1 zusammengefaßt.

**Tabelle 1**

| Polymer nach | Zusammensetzung m:n in Mol-% | Ausbeute in % | T_{g} in °C |
|---|---|---|---|
| Beispiel 11 | 50 : 50 | 82 | 135 |
| Beispiel 12 | 50 : 50 | 79 | 150 |

### Vernetzung der nichtlinear-optisch aktiven polymeren Materialien

### Beispiel 13

Zur Vernetzung wird das nichtlinear-optisch aktive Copolymer nach Beispiel 12, zusammen mit dem Vernetzer Bisphenol-A-bisglycidylether (BPABGE), auf geeignete Trägermaterialen, wie Glas, ITO-beschichtetes Glas (ITO = Indium-Zinn-Oxid) oder Siliziumwafer, durch Spin-coating aus einer Lösung, vorzugsweise Cyclohexanon, aufgebracht und bei erhöhter Temperatur, vorzugsweise 15 h bei 70°C, in Vakuum vom Lösungsmittel befreit. Anschließend wird das Substrat mit einer Deckelektrode versehen und im elektrischen DC-Feld langsam auf die Glasübergangstemperatur des jeweiligen Materials erwärmt; dabei wird das Schichtmaterial dipolar ausgerichtet und gleichzeitig vernetzt. Die Reaktionsbedingungen und die dabei erhaltenen Ergebnisse sind in Tabelle 2 zusammengefaßt (T_{g} = Glasübergangstemperatur).

### Beispiel 14

Entsprechend Beispiel 13 wird das nichtlinear-optisch aktive Copolymer nach Beispiel 11, zusammen mit dem Vernetzer p-Phenylendiisocyanat (p-PDIC), zu einem Bauelement verarbeitet. Die Reaktionsbedingungen und die erhaltenen Ergebnisse sind in Tabelle 2 zusammengefaßt.

**Tabelle 2**

| Polymeres Material nach Beispiel | Vernetzer | Temperaturverlauf bei der Vernetzung | T_{g} nach der Vernetzung | r³³-Wert *) in pm/V |
|---|---|---|---|---|
| 13 | BPABGE | 18C - 230°C | keine Tg bis 300°C | 48 |
| 14 | p-PDIC | 120 - 18C°C | keine Tg bis 300°C | 46 |

| | | | | |
|---|---|---|---|---|
| *) Der r³³-Wert ist ein Maß für die Leistungsfähigkeit eines NLO-Modulators. Für Azofarbstoffe, beispielsweise vom Typ "Disperse Red", werden maximal Werte von 10 pm/V erreicht. | | | | |

### Beispiel 15

### Elektrooptische Untersuchungen

Für die elektrooptischen Untersuchungen werden aus den erfindungsgemäßen polymeren Materialien Filme mit üblicherweise 2 bis 6 µm Schichtdicke hergestellt. Für das elektrische Polen, zur Erzielung einer hohen nicht-zentrosymmetrischen Orientierung, wird auf den Film (aus dem polymeren Material) eine Goldelektrode aufgesputtert; die Gegenelektrode ist dabei eine lichtdurchlässige ITO-Schicht. Beim Erwärmen der Probe bis in den Glasübergangstemperaturbereich wird eine Gleichspannung angelegt, wobei die erforderliche Spannungserhöhung auf das Orientierungsverhalten der nichtlinear-optischen Moleküleinheiten abgestimmt wird, um elektrische Durchschläge und somit eine Zerstörung des Films zu vermeiden. Nach Erreichen einer Polungsfeldstärke von 100 bis 200 V/µm genügt eine Polungsdauer von ca. 30 min zur Orientierung der nichtlinear-optischen Moleküleinheiten. Danach wird die Probe - mit konstant anliegendem Feld - bis auf Raumtemperatur abgekühlt, wodurch die Orientierung fixiert wird.

Die elektrooptischen Untersuchungen der Polymerproben erfolgen durch interferometrische Messung eines schräg eingestrahlten Laserstrahls nach Einfachreflexion an der Goldelektrode. Der dazu erforderliche Meßaufbau und die Meßauswertung sind bekannt (siehe beispielsweise: "Appl. Phys. Lett.", Vol. 56 (1990), Seiten 1734 bis 1736).

Die erfindungsgemäßen Copolymeren bzw. vernetzten Polymermaterialien zeigen nach der Polarisierung eine hohe Orientierungsstabilität. Die darin enthaltenen Chromophore weisen eine ausgezeichnete Temperaturstabilitat auf, so daß die Materialien zur Herstellung technisch verwertbarer, langzeitstabiler elektrooptischer und photonischer Bauteile geeignet sind.

## Patentansprüche

1. Nichtlinear-optisch aktive Copolymere der allgemeinen Formel 1 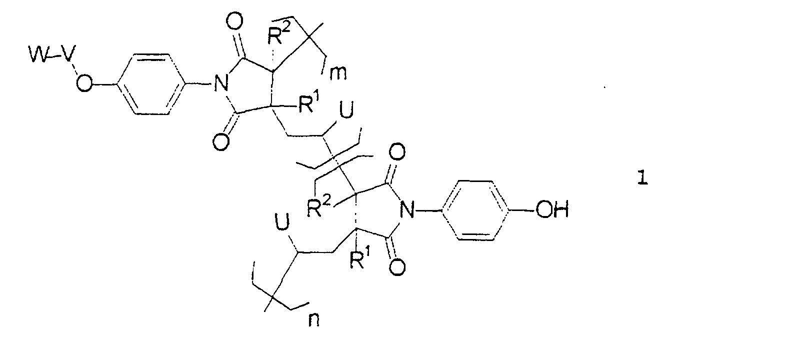 wobei folgendes gilt:
R¹, R² sind - unabhängig voneinander - H, CH₃ oder Halogen;
U ist ein linearer oder verzweigter C₁- bis C₂₀-Alkylrest, ein C₅- bis C₇-Cycloalkylrest, ein bi- oder tri-cyclischer Alkylrest mit bis zu 18 C-Atomen, ein Aryl - oder Heteroarylrest oder ein alkylsubstituierter Silanrest der Struktur -(CH₂)ₙ-Si(R',R'',R''') mit n = 1 bis 5 und R', R'', R''' C₁- bis C₅-Alkyl;
V ist eine lineare oder verzweigte Kohlenwasserstoffkette mit 2 bis 20 C-Atomen, wobei eine oder mehrere nicht-benachbarte CH₂-Gruppen, mit Ausnahme der bindenden CH₂-Gruppe zum Rest W, durch O, S oder NR³ ersetzt sein können, wobei R³ für H oder einen linearen oder verzweigten C₁- bis C₆-Alkylrest steht;
W ist eine nichtlinear-optisch aktive Gruppe;
m : n = 5 : 95 bis 95 : 5.

2. Copolymere nach Anspruch 1, **dadurch gekennzeichnet, daß** W eine nichtlinear-optisch aktive Gruppe der allgemeinen Formel 2 ist: 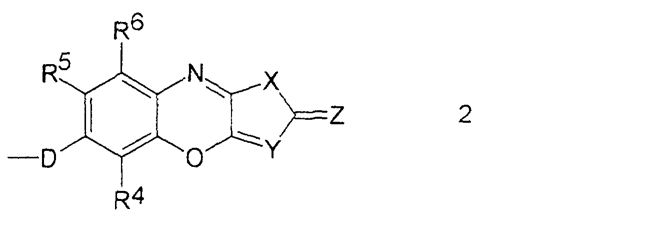 die mit D an V gebunden ist, und wobei
D für O, S oder NR⁷ steht, wobei R⁷ ein Wasserstoffatom, ein linearer oder verzweigter C₁- bis C₂₀- Alkylrest, welcher gegebenenfalls durch 1 bis 5 Sauerstoffatome in Etherfunktion unterbrochen ist, ein Benzylrest oder ein Phenyl- oder Naphthylrest ist oder R⁷ und V zusammen mit dem sie verbindenden N-Atom einen Pyrrolidinyl-, Piperidinyl-, Morpholinyl- oder Piperazinylrest bilden,
R⁴, R⁵, R⁶ jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, oder ein Phenyl-, Naphthyl-, Thienyl-, Thiazolyl- oder Pyridylrest sind,
Z eine Elektronenakzeptor-substituierte Methylen - oder Iminogruppe ist,
X für S, O, NR⁸ oder eine Ringdoppelbindung oder für 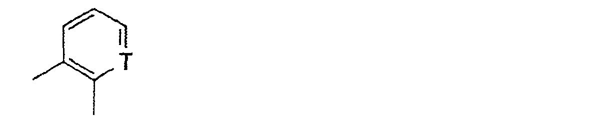 steht, wobei R⁸ ein Wasserstoffatom, ein linearer oder verzweigter C₁- bis C₂₀-Alkylrest oder ein Phenyl- oder Naphthylrest ist und T für CH oder N steht oder gegebenenfalls Z und T zusammen eine Struktur vom Typ =N-SO₂-C≡, =N-CS-C≡ oder =N-CO-C≡ bilden, und
Y eine CH- oder CR⁹-Gruppe oder N ist, wobei R⁹ ein linearer oder verzweigter C₁- bis C₂₀-Alkylrest, ein Phenyl- oder ein Naphthylrest ist.

3. Copolymere nach Anspruch 1 oder 2, **dadurch gekennzeichnet, daß** R¹ und R ² jeweils ein Wasserstoffatom bedeuten.

4. Copolymere nach einem der Ansprüche 1 bis 3, **dadurch gekennzeichnet, daß** U eine C₆bis C₁₀-Alkylgruppe, eine C₆-Cycloalkylgruppe, ein Phenylrest oder eine Silylgruppe der allgemeinen Formel -(CH₂)ₙ-Si(R',R'',R''') ist, wobei n = 1 ist und R', R'' und R''' - unabhängig voneinander - C₁- bis C₅-Alkylgruppen sind.

5. Copolymere nach einem der Ansprüche 1 bis 4, **dadurch gekennzeichnet, daß** V ein C₂bis C₆-Kohlenwasserstoffrest ist.

6. Copolymere nach einem der Ansprüche 1 bis 5, **dadurch gekennzeichnet, daß** Z eine Dicyanomethylen-, Alkoxycarbonyl-cyanomethylen-, Cyaniminooder Alkoxycarbonyliminogruppe ist.

7. Copolymere nach einem der Ansprüche 1 bis 6, **dadurch gekennzeichnet, daß** das Chromophor W einen Anteil von 5 bis 95 Mol-% ausmacht.

8. Copolymere nach Anspruch 7, **dadurch gekennzeichnet, daß** das Chromophor W einen Anteil von 20 bis 50 Mol-% ausmacht.

9. NLO-Polymermaterial, bestehend aus einem nichtlinear-optisch aktiven Copolymer mit vernetzbaren, freien phenolischen Hydroxylgruppen nach einem der Ansprüche 1 bis 8, das mit mindestens einem funktionalisierten Vernetzer zur Reaktion gebracht ist, wobei auf 1 Grammaquivalent vernetzbare freie Hydroxylgruppen des nichtlinear-optisch aktiven Copolymers 1/n Grammäquivalent des n-funktionellen Vernetzers entfallen.

10. NLO-Polymermaterial nach Anspruch 9, **dadurch gekennzeichnet, daß** der Vernetzer aus den folgenden Verbindungsklassen ausgewählt ist:
a) bi- oder oligo-funktionalisierte Glycidether, die durch Ringöffnung und Etherbildung die freien phenolischen Hydroxylgruppen addieren;
b) bi- oder oligo-funktionaliserte Isocyanate bzw. Isothiocyanate, die durch Urethanbildung die freien phenolischen Hydroxylgruppen addieren; und
c) bifunktionelle Anhydride zusammen mit einem beliebigen nicht-flüchtigen Oxiranderivat, wobei durch Esterbildung - infolge der Addition des Anhydrids an die freien phenolischen Hydroxylgruppen - die Vernetzung stattfindet und dann die bei dieser Reaktion gebildeten Carboxylgruppen an das Oxiranderivat addiert werden.

11. Elektrooptische und photonische Bauelemente, **dadurch gekennzeichnet, daß** sie wenigstens eine Funktionsschicht aus einem vernetzten NLO-Polymer nach Anspruch 9 oder 10 auf einem Trägermaterial umfassen.

12. Elektrooptische und photonische Bauelemente nach Anspruch 11, **dadurch gekennzeichnet, daß** die wenigstens eine Funktionsschicht zwischen zwei Pufferschichten angeordnet ist.

13. Elektrooptische und photonische Bauelemente nach Anspruch 12, **dadurch gekennzeichnet, daß** wenigstens eine der Pufferschichten aus einem entsprechenden vernetzten NLO-Polymer wie die Funktionsschicht besteht.

## Claims

1. Nonlinear-optically active copolymer of the general formula 1 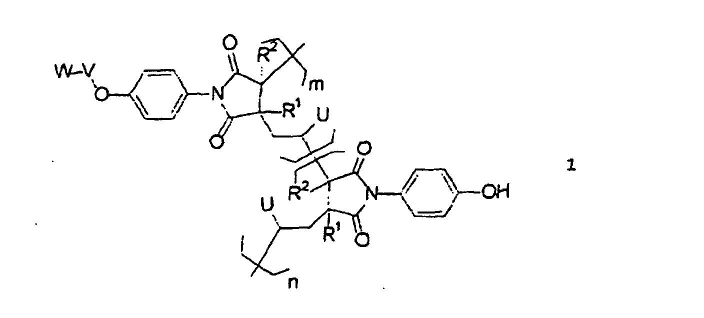 where:
R¹, R² are, independently of one another, H, CH₃ or halogen;
U is a linear or branched C₁-C₂₀-alkyl radical, a C₅-C₇-cycloalkyl radical, a bi- or tricyclic alkyl radical having up to 18 carbon atoms, an aryl or heteroaryl radical, or an alkyl-substituted silane radical of the structure -(CH₂)ₙ-Si(R',R'',R''') where n = 1 to 5 and R', R'', R''' = C₁-C₅-alkyl;
V is a linear or branched hydrocarbon chain having 2 to 20 carbon atoms, where one or more nonadjacent CH₂ groups, with the exception of the CH₂ group providing the link to the radical W, can be replaced by O, S or NR³, where R³ is H or a linear or branched C₁-C₆-alkyl radical;
W is a nonlinear-optically active group; and
m : n = 5 : 95 to 95 : 5.

2. Copolymer according to Claim 1, **characterized in that** W is a nonlinear-optically active group of the general formula 2: 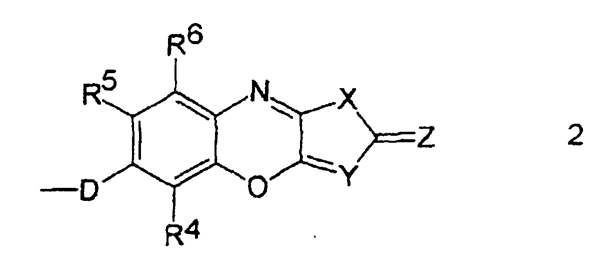 which is attached by D to V and where
D is O, S or NR⁷, where R⁷ is a hydrogen atom, a linear or branched C₁-C₂₀-alkyl radical which is uninterrupted or interrupted by 1 to 5 oxygen atoms in ether function, a benzyl radical or a phenyl or naphthyl radical, or R⁷ and V, together with the nitrogen atom connecting them, form a pyrrolidinyl, piperidinyl, morpholinyl or piperazinyl radical,
R⁴, R⁵, R⁶ are each a hydrogen atom, a linear or branched C₁-C₂₀-alkyl radical which is uninterrupted or interrupted by 1 to 5 oxygen atoms in ether function, or are a phenyl, naphthyl, thienyl, thiazolyl or pyridyl radical,
Z is an electron-acceptor-substituted methylene or amino group,
X is S, O, NR⁸ or a ring double bond or is 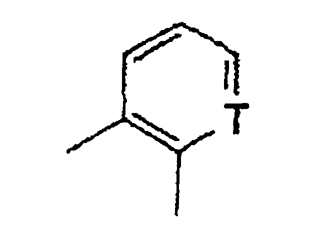 where R⁸ is a hydrogen atom, a linear or branched C₁-C₂₀-alkyl radical or a phenyl or naphthyl radical and T is CH or N, or if desired, Z and T together form a structure of the type =N-SO₂-C≡, =N-CS-C≡ or =N-CO-C≡, and
Y is a CH or CR⁹ group or is N, where R⁹ is a linear or branched C₁-C₂₀ alkyl radical, a phenyl radical or a naphthyl radical.

3. Copolymer according to Claim 1 or 2, **characterized in that** R¹ and R² are each a hydrogen atom.

4. Copolymer according to any one of Claims 1 to 3, **characterized in that** U is a C₆-C₁₀-alkyl group, a C₆-cycloalkyl group, a phenyl radical or a silyl group of the general formula -(CH₂)ₙ-Si(R'R'',R'''), where n = 1 and R', R'' and R''', independently of one another, are C₁-C₅-alkyl groups.

5. Copolymer according to any one of Claims 1 to 4, **characterized in that** V is a C₂-C₆-hydrocarbon radical.

6. Copolymer according to any one of Claims 1 to 5, **characterized in that** Z is a dicyanomethylene, alkoxycarbonylcyanomethylene, cyanoimino or alkoxycarbonylimino group.

7. Copolymer according to any one of Claims 1 to 6,
**characterized in that** the chromophore W makes up a proportion from 5 to 95 mol%.

8. Copolymer according to Claim 7, **characterized in that** the chromophore W makes up a proportion from 20 to 50 mol%.

9. NLO polymer material consisting of a nonlinear-optically active copolymer having crosslinkable, free phenolic hydroxyl groups according to any one of Claims 1 to 8, which is reacted with at least one functionalized crosslinker, there being 1/n gram equivalent of the n-functional crosslinker per gram equivalent of crosslinkable free hydroxyl groups of the nonlinear-optically active copolymer.

10. NLO polymer material according to Claim 9, **characterized in that** the crosslinker is selected from the following classes of compound:
a) bi- or oligo-functionalized glycidyl ethers which add the free phenolic hydroxyl groups by ring opening and ether formation;
b) bi- or oligo-functionalized isocyanates or isothiocyanates, which add the free phenolic hydroxyl groups by urethane formation;
c) bifunctional anhydrides together with any desired nonvolatile oxirane derivative, in which case crosslinking takes place by ester formation - as a result of the addition of the anhydride onto the free phenolic hydroxyl groups - and then the carboxyl groups formed in this reaction are added onto the oxirane derivative.

11. Electrooptical or photonic component, **characterized in that** it comprises at least one functional layer comprising a crosslinked NLO polymer according to Claim 9 or 10 on a support material.

12. Electrooptical or photonic component according to Claim 11, **characterized in that** the at least one functional layer is arranged between two buffer layers.

13. Electrooptical or photonic component according to Claim 12, **characterized in that** at least one of the buffer layers consists of a crosslinked NLO polymer like the functional layer.

## Revendications

1. Copolymères actifs optiquement d'une façon non linéaire de formule développée 1 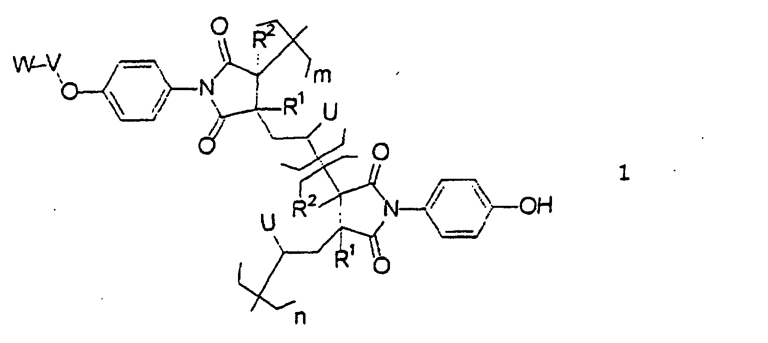 dans laquelle :
R¹, R² sont, indépendamment l'un de l'autre, H, CH₃ ou halogène ;
U est un radical alcoyle linéaire ou ramifié ayant de 1 à 20 atomes de carbone, un radical cycloalcoyle ayant de 5 à 7 atomes de carbone, un radical alcoyle bicyclique ou tricyclique ayant jusqu'à 18 atomes de carbone, un radical aryle ou hétéroaryle ou un radical silanique à substitution alcoyle de structure -(CH₂)ₙ-Si(R', R", R"') avec n = 1 à 5 et R', R", R"' = alcoyle ayant de 1 à 5 atomes de carbone ;
V est une chaîne hydrocarbonée linéaire ou ramifiée ayant de 2 à 20 atomes de carbone, un groupe CH₂ ou plusieurs groupes CH₂ non voisins, à l'exception du groupe CH₂ de liaison au radical W, pouvant être remplacé par O, S ou NR³, R³ représentant H ou un radical alcoyle linéaire ou ramifié ayant de 1 à 6 atomes de carbone;
W est un groupe à activité optique non linéaire;
m : n = 5 : 95 à 95 : 5.

2. Copolymères suivant la revendication 1, **caractérisés en ce que** W est un groupe à activité optique non linéaire de formule développée 2 : 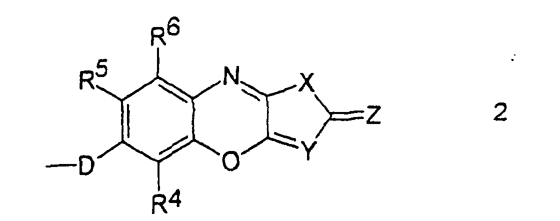 qui est lié à V par D et dans laquelle
D est O, S ou NR⁷, R⁷ étant un atome d'hydrogène, un radical alcoyle linéaire ou ramifié ayant de 1 à 20 atomes de carbone qui est interrompu, le cas échéant, par de 1 à 5 atomes d'oxygène en fonction étheroxyde, un radical benzyle ou un radical phényle ou naphtyle ou R⁷ et V forment ensemble avec l'atome d'azote auquel ils sont reliés un radical pyrrolidinyle, pipéridinyle, morpholinyle ou pipérazinyle,
R⁴, R⁵, R⁶ sont respectivement un atome d'hydrogène, un radical alcoyle linéaire ou ramifié ayant de 1 à 20 atomes de carbone qui est interrompu, le cas échéant, par de 1 à 5 atomes d'oxygène en fonction étheroxyde ou un radical phényle, naphtyle, thiényle, thiazolyle ou pyridyle,
Z est un groupe méthylène ou imino substitué par un accepteur d'électrons,
X est S, O, NR⁸ ou une double liaison dans un cycle ou représente 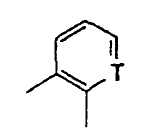 dans laquelle R⁸ est un atome d'hydrogène, un radical alcoyle linéaire ou ramifié ayant de 1 à 20 atomes de carbone ou un radical phényle ou naphtyle et T est CH ou N ou le cas échéant E et T forment ensemble une structure du type =N-SO₂-C≡, =N-CS-C≡ ou =N-CO-C≡ et
Y est un groupe CH ou CR⁹ ou N, R⁹ étant un radical alcoyle linéaire ou ramifié ayant de 1 à 20 atomes de carbone, un radical phényle ou un radical naphtyle.

3. Copolymères suivant la revendication 1 ou 2, **caractérisés en ce que** R¹ et R² signifient respectivement un atome d'hydrogène.

4. Copolymères suivant l'une des revendications 1 à 3, **caractérisés en ce que** U est un groupe alcoyle ayant de 1 à 10 atomes de carbone, un groupe cycloalcoyle ayant 6 atomes de carbone, un radical phényle ou un groupe silyle de formule générale -(CH₂)ₙ-Si(R',R'',R''') dans laquelle n = 1 et R', R" et R'" sont indépendamment les uns des autres des groupes alcoyle ayant de 1 à 5 atomes de carbone.

5. Copolymères suivant l'une des revendications 1 à 4, **caractérisés en ce que** V est un radical hydrocarboné ayant de 2 à 6 atomes de carbone.

6. Copolymères suivant l'une des revendications 1 à 5, **caractérisés en ce que** Z est un groupe dicyanométhylène, alcoxycarbonylcyanométhylène, cyanimino ou alcoxycarbonylimino.

7. Copolymères suivant l'une des revendications 1 à 6, **caractérisés en ce que** le chromophore W représente une proportion de 5 à 95 % en mole.

8. Copolymères suivant la revendication 7, **caractérisés en ce que** le chromophore W représente une proportion de 20 à 50 % en mole.

9. Matériau polymère NLO constitué d'un copolymère actif optiquement d'une manière non linéaire ayant des groupes hydroxyles phénoliques libres et réticulables suivant l'une des revendications 1 à 8, qui est mis à réagir sur au moins un agent de réticulation fonctionnalisé, 1/n gramme équivalent de l'agent de réticulation n fonctionnel étant présent pour 1 gramme équivalent de groupes hydroxyles libres et réticulables du copolymère actif optiquement d'une façon non linéaire.

10. Matériau polymère NLO suivant la revendication 9, **caractérisé en ce que** l'agent de réticulation est choisi dans les classes de composés suivants :
a) des oxydes glycydiliques bi-fonctionnalisés ou oligo-fonctionnalisés qui fixent par ouverture de cycle et formation d'étheroxydes les groupes hydroxyles phénoliques libres ;
b) des isocyanates ou isothiocyanates bi-fonctionnalisés ou oligo-fonctionnalisés qui fixent par uréthanisation les groupes hydroxyles phénoliques libres ; et
c) des anhydrides bi-fonctionnels ensemble avec un dérivé d'oxirane quelconque non volatil, la réticulation ayant lieu par estérification - en raison de l'addition de l'anhydride sur les groupes hydroxyles phénoliques libres - et ensuite les groupes carboxyles formés par cette réaction se fixant par addition sur le dérivé oxirane.

11. Composant électro-optique et photonique, **caractérisé en ce qu'**il comprend au moins une couche fonctionnelle en un polymère NLO réticulé suivant la revendication 9 ou 10 sur un matériau servant de support.

12. Composant électro-optique et photonique suivant la revendication 11, **caractérisé en ce que** la au moins une couche fonctionnelle est interposée entre deux couches tampon.

13. Composant électro-optique et photonique suivant la revendication 12, **caractérisé en ce que** au moins l'une des couches tampon est en un polymère NLO réticulé correspondant comme la couche fonctionnelle.
